# EUROPEAN PATENT SPECIFICATION

(11) **EP 3 808 214 B1**
(45) Date of publication and mention of the grant of the patent: **12.11.2025**
(21) Application number: 19820304.4
(22) Date of filing: 14.06.2019
(51) Int. Cl.: A47B 47/00, E04B 1/19, F16B 7/20, F16B 12/40, F16B 12/30

(54) **FRAME ELEMENT COUPLING DEVICE AND STORAGE RACK**
RAHMENELEMENTKUPPLUNGSVORRICHTUNG UND LAGERGESTELL
DISPOSITIF D'ACCOUPLEMENT D'ÉLÉMENT DE CADRE ET SUPPORT DE RANGEMENT

(30) Priority: 15.06.2018 JP 2018114688
(43) Date of publication of application: 21.04.2021
(73) Proprietor: Tesera co., Ltd., Kanazawa City, Ishikawa 920-8685 (JP)
(72) Inventor: UCHIDA, Takehiko, Tokyo 101-0051 (JP)
(74) Representative: Patentanwaltskanzlei WILHELM & BECK
(86) International application number: PCT/JP2019/023665
(87) International publication number: WO 2019/240263

(56) References cited:
- WO-A1-2010/038248
- DE-A1- 102016 120 378
- DE-U1- 202008 000 043
- FR-A1- 2 410 162
- GB-A- 1 261 219
- JP-U- 3 103 189
- JP-U- S6 446 510
- US-A- 3 854 831

## Description

### Technical Field

The present invention relates to a frame element coupling device and a storage shelf.

### Background Art

In the related art, storage shelves in which a panel and/or a drawer is mounted to a frame composed of a plurality of frame elements are known (see PTL 1). In such storage shelves, frame elements orthogonal to each other are coupled using a joint member.

The documents WO 2010/038248 A1, FR 2 410 162 A1, DE 20 2008 000043 U1, GB 1 261 219 A, US 3 854 831 A disclose various frame element coupling devices. In particular, the frame element coupling device disclosed in WO 2010/038248 A1 is configured to couple a first frame element extending in a first direction and a second frame element extending in a second direction different from the first direction. The device disclosed in WO 2010/038248 A1 includes a joint member, an anchor member, and a coupling member. The joint member is disposed at one end of the first frame element, and is configured to couple the first frame element and the second frame element. The anchor member is disposed at another end of the first frame element. Furthermore, the coupling member is inserted in the first frame element, and is configured to couple the joint member and the anchor member.

### Citation List

### Patent Literature

PTL 1
Japanese Patent Application Laid-Open No. 2016-10688

### Summary of Invention

### Technical Problem

In storage shelves described above, it is important to firmly fix frame elements together from the viewpoint of reducing the rattle.

An object of the present invention is to provide a frame element coupling device and a storage shelf that can firmly fix frame elements together.

### Solution to Problem

A frame element coupling device according to the present invention is disclosed in the appended claim 1.

A storage shelf according to an embodiment of the present invention includes the frame element coupling device of claim 1.

### Advantageous Effects of Invention

According to the present invention, a frame element coupling device and a storage shelf that can firmly fix frame elements together can be provided.

### Brief Description of Drawings

FIG. 1A is a front view of a storage shelf according to an embodiment;
FIG. 1B is a plan view of the storage shelf illustrated in FIG. 1A;
FIG. 1C is a left side view of the storage shelf illustrated in FIG. 1A;
FIG. 1D is a right side view of the storage shelf illustrated in FIG. 1A;
FIG. 2 is an enlarged sectional view of an X part illustrated in FIG. 1A;
FIG. 3 is an exploded view of the X part illustrated in FIG. 1A;
FIG. 4A is a plan view of an upper joint;
FIG. 4B is a diagram as viewed in A₁ of FIG. 4A;
FIG. 5A is a plan view of a middle joint;
FIG. 5B is a diagram as viewed in A₂ of FIG. 5A;
FIG. 6A is a plan view of a lower joint;
FIG. 6B is a diagram as viewed in A₃ of FIG. 6A;
FIG. 7A is an exploded sectional view illustrating the middle joint, a lateral frame element and a depth frame element;
FIG. 7B is a sectional view illustrating a state where the middle joint, the lateral frame element and the depth frame element are fixed;
FIG. 7C is a diagram illustrating an end surface of the lateral frame element;
FIG. 8A is a diagram for describing an assembling process of the frame element coupling device;
FIG. 8B is a diagram for describing a process subsequent to FIG. 8A; and
FIG. 8C is a diagram for describing a process subsequent to FIG. 8B.

### Description of Embodiments

An example according to an embodiment of the present invention is described below with reference to the drawings. Note that the present invention is not limited to the structure of the following embodiment.

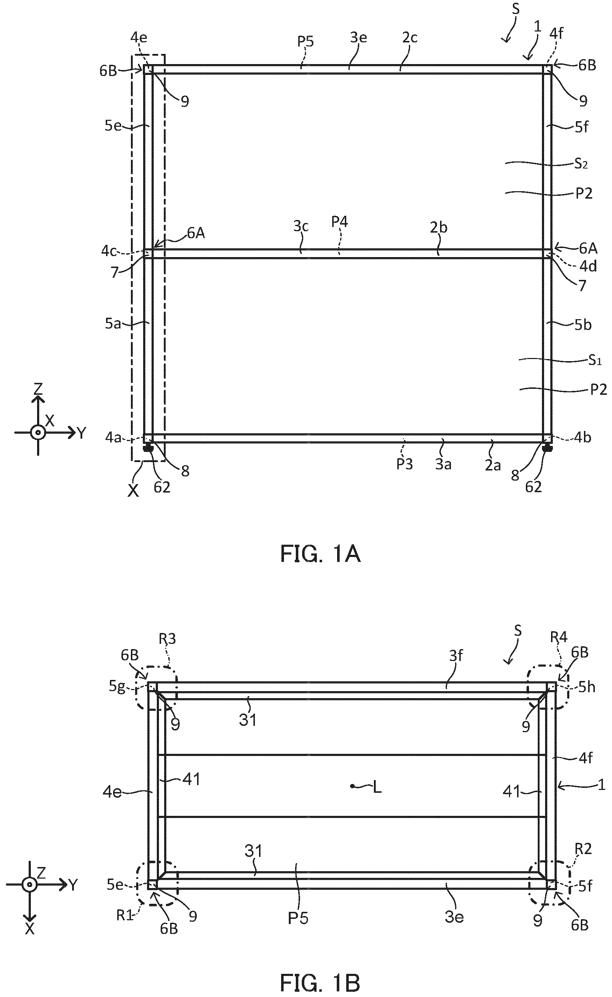

FIGS. 1A to 1D are a front view, a plan view, a left side view, and a right side view, respectively, of storage shelf S according to the embodiment of the present invention.

Details of a structure of storage shelf S according to the present embodiment are described below. Note that in the following description, members of storage shelf S are described with a state where they are incorporated in storage shelf S as a reference. In addition, in some cases the orthogonal coordinate system (X, Y, Z) indicated in the drawings is used to describe the structure of storage shelf S.

Specifically, in the orthogonal coordinate system when in use, the X direction coincides with a front-rear direction (also referred to as a depth direction) of storage shelf S, the Y direction coincides with a horizontal direction (also referred to as a width direction) of storage shelf S, and the Z direction coincides with a vertical direction (also referred to as a height direction) of storage shelf S.

In addition, in the following description, the inside of each frame element and each joint means the inside of first frame part 2a, second frame part 2b, and third frame part 2c described later. The outside of each frame element and each joint means the outside of first frame part 2a, second frame part 2b, and third frame part 2c.

In addition, the four corners of storage shelf S in plan view (see FIG. 1B) are first corner part R1, second corner part R2, third corner part R3, and fourth corner part R4.

In addition, in the following description, an example in which the frame element coupling device according to the embodiment of the present invention applied to a storage shelf is described. It should be noted that the frame element coupling device according to the embodiment of the present invention is not limited to a storage shelve, but may be applied to furniture such as, for example, separators, living room boards, kitchens, cupboards, kitchen wagons, rockers, tables, chairs, beds, or television boards, and building materials such as plate panels that make up the interior walls or ceilings of a house.

### Storage Shelf

Storage shelf S illustrated in FIGS. 1A to 1D is a shelf that has one row in the horizontal direction and two sections in the vertical direction. Note that the number of rows and the number of sections of storage shelf S are not limited to the illustration in the drawing. The number of rows and the number of sections of storage shelf S may be appropriately changed in accordance with the use conditions and objects.

Storage shelf S includes frame 1, a plurality of (in the present embodiment, four) side plates P1, a plurality of (in the present embodiment, two) back plates P2, lower shelf plate P3, middle shelf plate P4, and upper shelf plate P5.

### Frame

Frame 1 includes lateral frame elements 3a to 3f, depth frame elements 4a to 4f, vertical frame elements 5a to 5h, and a plurality of frame element coupling devices 6A and 6B for coupling the frames.

### Lateral Frame Element

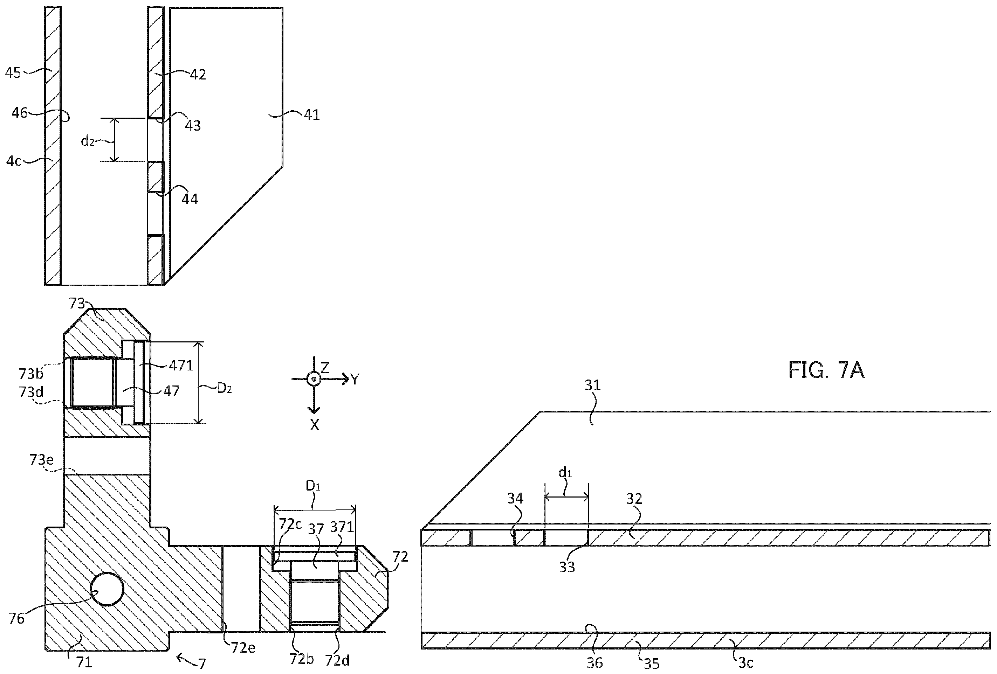

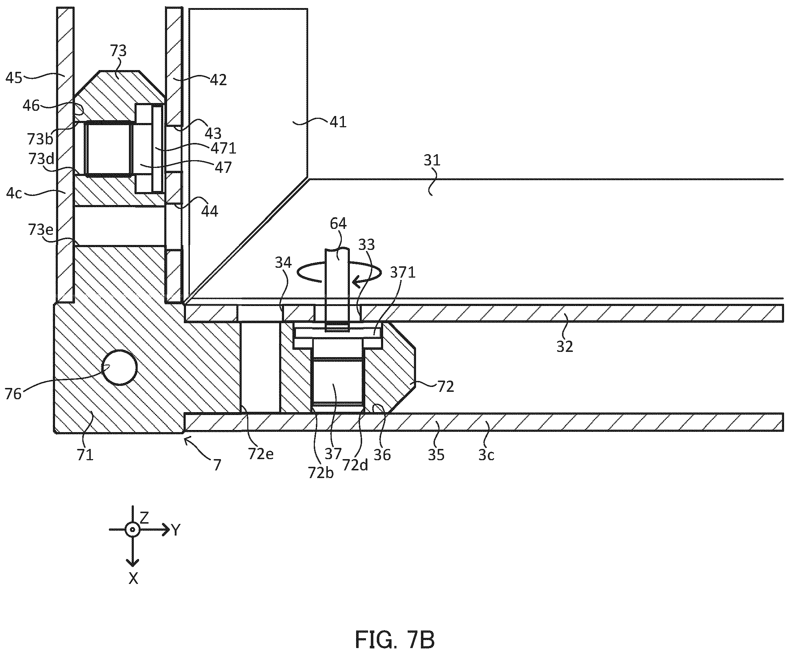

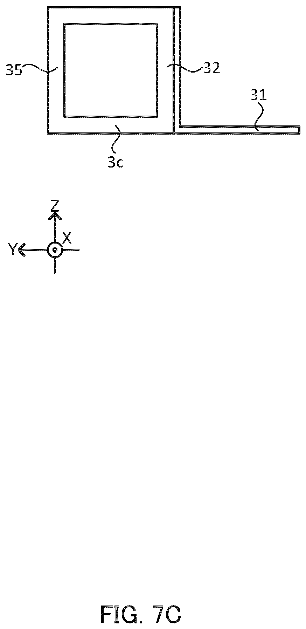

Lateral frame elements 3a to 3f are described with reference to FIGS. 1A to 1D, 7A and 7B. Each of lateral frame elements 3a to 3f is a tubular member that extends in the horizontal direction and has a rectangular (a square in the present embodiment, see FIG. 7C) shape in a cross-section taken along the XZ plane. Note that each of lateral frame elements 3a to 3f may have a cross-sectional shape other than the rectangular shape (e.g., a circular shape or an elliptical shape). In addition, in the following description of each frame element, a tubular shape is not limited to a shape that is continuous over the whole circumference around the central axis of each frame member (see lateral frame element 3c illustrated in FIG. 7C), and may be a shape that is partially discontinuous around the central axis of each frame member (e.g., a shape having a C-cross-sectional shape).

As illustrated in FIGS. 7A to 7C, each of lateral frame elements 3a to 3f includes placement plate part 31 extended to the inside from the inner surface (also referred to as a first side surface of a lateral frame element) at the lower end portion of the inner surface. Placement plate part 31 is formed over the entire length of the inner surface of lateral frame elements 3a to 3f. Lower shelf plate P3, middle shelf plate P4, or upper shelf plate P5 described later is placed at placement plate part 31. Note that FIGS. 7A to 7C illustrate lateral frame element 3c supported by middle joint 7 described later. The description for lateral frame element 3c may be appropriately applied to the structures of lateral frame elements 3a, 3b and 3d to 3f.

Each lateral frame elements 3a to 3f includes tool-through hole 33 and mounting hole 34 extending through inner wall part 32 at both end portions of inner wall part 32 (also referred to as a first wall part of a lateral frame, see FIG. 7A). Inner diameter d1 of tool-through hole 33 is smaller than external shape Di of head part 371 of fastening member 37 (d₁<D₁) (see FIG. 7A). Note that the first wall part of the lateral frame is not limited to the inner wall parts of lateral frame elements 3a to 3f. For example, the first wall part of the lateral frame may be the external wall parts of lateral frame elements 3a to 3f.

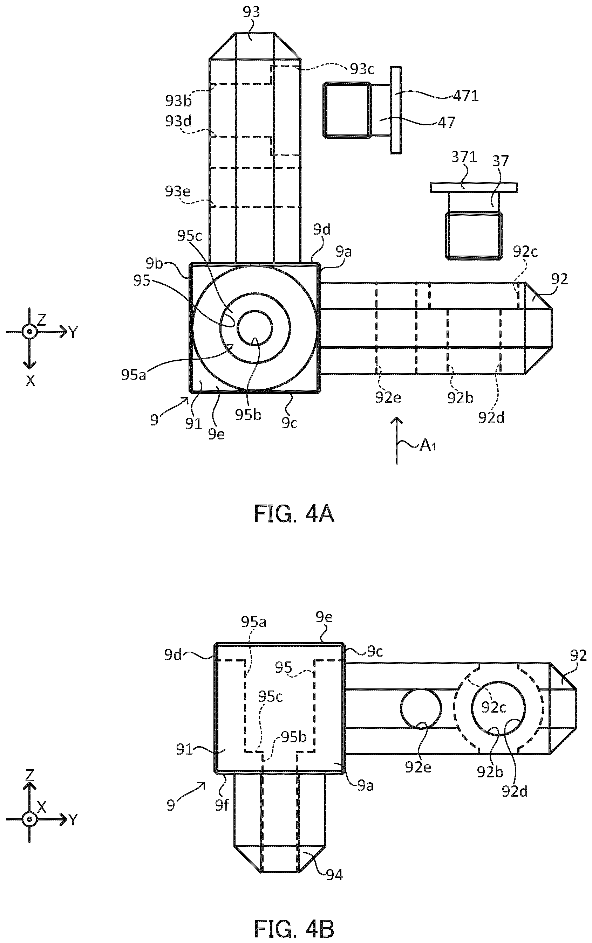

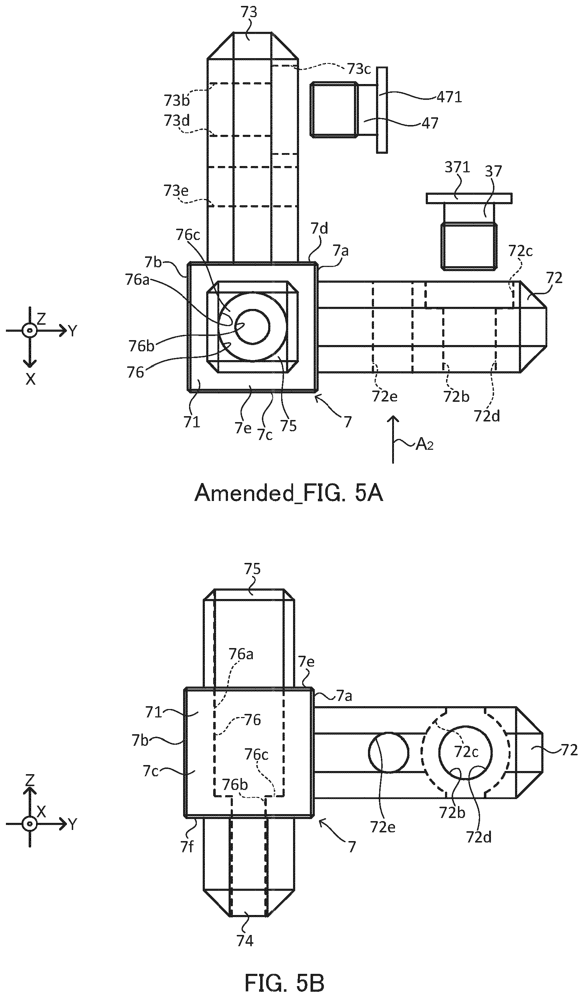

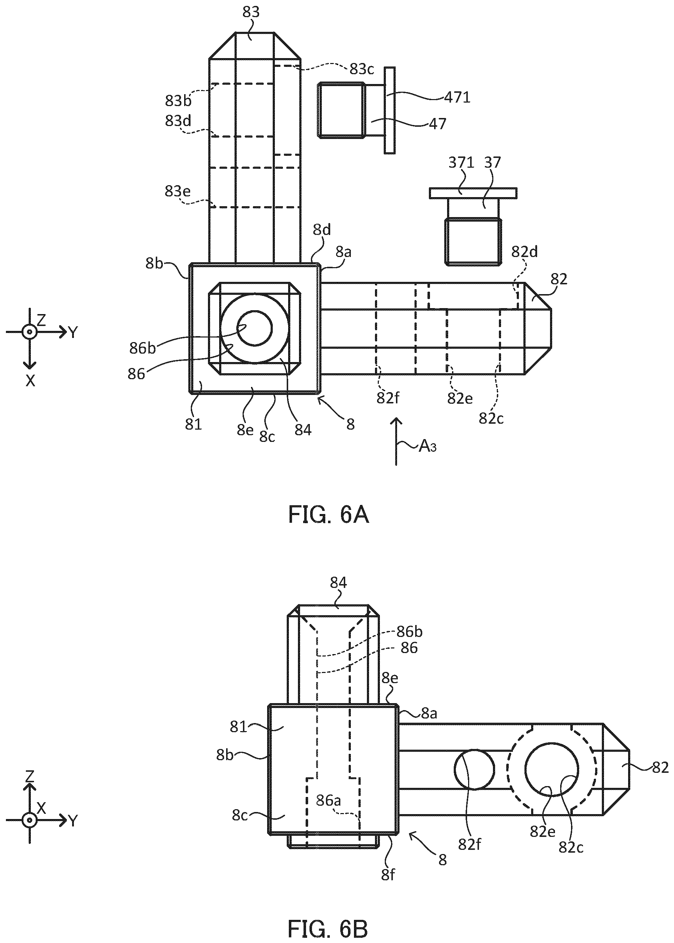

A fastening member (not illustrated in the drawing) such as a bolt for fixing a box-shaped member (not illustrated in the drawing) disposed in housing parts S1 and S2 described later to lateral frame elements 3a to 3f is inserted in mounting hole 34. This fastening member is threadedly engaged with second female screw part 92e of first horizontal fixing part 92 of upper joint 9 described later (see FIG. 4A), second female screw part 72e of first horizontal fixing part 72 of middle joint 7 described later (see FIG. 5A), and second female screw part 82f of first horizontal fixing part 82 of lower joint 8 (see FIG. 6A). Note that the above-described box-shaped member may include a drawer or a door, for example.

Each of lateral frame elements 3a to 3f includes flat receiving surface 36 at a portion opposite to tool-through hole 33 at the inner surface of external wall part 35 (also referred to as a second wall part of a lateral frame). Note that the second wall part of the lateral frame is not limited to the external wall part of lateral frame elements 3a to 3f. It suffices that the second wall part of the lateral frame element is a side wall part that is opposite to the first wall part of the lateral frame element.

Lateral frame elements 3a and 3b are provided away from each other in the front-rear direction at the same height. Lateral frame elements 3a and 3b form first frame part 2a described later, which is provided in the lower section of frame 1.

Lateral frame elements 3c and 3d are provided away from each other in the front-rear direction at the same height. Lateral frame elements 3c and 3d are provided above lateral frame elements 3a and 3b. Lateral frame elements 3c and 3d form second frame part 2b described later, which is provided in the middle section of frame 1.

Lateral frame elements 3e and 3f are provided away from each other in the front-rear direction at the same height. Lateral frame elements 3e and 3f are provided above lateral frame elements 3c and 3d. Lateral frame elements 3e and 3f form third frame part 2c described later, which is provided in the upper section of frame 1.

Note that in the present embodiment, the lateral frame element is a single continuous tubular member. It should be noted that the lateral frame element may be a plurality of tubular members connected in series. For example, the lateral frame element may be composed of lateral frame elements 3a to 3f illustrated in FIGS. 1A and 1B, and additional lateral frame elements (not illustrated in the drawing) connected to the left end or right end of lateral frame elements 3a to 3f.

### Depth Frame Element

Next, depth frame elements 4a to 4f are described with reference to FIGS. 1A to 1D, 7A and 7B. Each of depth frame elements 4a to 4f is a tubular member that extends in the front-rear direction and has a rectangular (in the present embodiment, square) shape in a cross-section taken along the YZ plane. Note that the cross-sectional shape of each of depth frame elements 4a to 4f is the same as the cross-sectional shape of lateral frame element 3c illustrated in FIG. 7C.

As illustrated in FIGS. 7A to 7C, each of depth frame elements 4a to 4f includes placement plate part 41 extended to the inside from the inner surface (also referred to as a first side surface of a depth frame) at a lower end portion of the inner surface. Placement plate part 41 is formed over the entire length of the inner surface of depth frame elements 4a to 4f. Lower shelf plate P3, middle shelf plate P4, or upper shelf plate P5 described later is placed at placement plate part 41.

Each of depth frame elements 4a to 4f includes tool-through hole 43 and mounting hole 44 extending through inner wall part 42 at both end portions of inner wall part 42 (also referred to as a first wall part of a depth frame). Inner diameter d₂ of tool-through hole 43 is smaller than external shape D₂ of head part 471 of fastening member 47 (d₂<D₂). Note that the first wall part is not limited to the inner wall part of depth frame elements 4a to 4f. For example, the first wall part of the depth frame may be the external wall parts of depth frame elements 4a to 4f.

A fastening member (not illustrated in the drawing) such as a bolt for fixing a box-shaped member (not illustrated in the drawing) disposed in housing parts S1 and S2 described later to depth frame elements 4a to 4f is inserted to mounting hole 44. This fastening member is threadedly engaged with second female screw part 93e of second horizontal fixing part 93 of upper joint 9 described later (see FIGS. 4A and 4B), second female screw part 73e of second horizontal fixing part 73 of middle joint 7 described later (see FIGS. 5A and 5B), and second female screw part 83e of second horizontal fixing part 83 of lower joint 8 described later (see FIGS. 6A and 6B).

Each of depth frame elements 4a to 4f includes flat receiving surface 46 at a portion opposite to tool-through hole 43 at the inner surface of external wall part 45 (also referred to as a second wall part of the depth frame). Note that the second wall part of the depth frame element is not limited to the external wall part of the depth frame element. It suffices that the second wall part of the depth frame element is a side wall part that is opposite to the first wall part of the depth frame element.

Depth frame elements 4a and 4b are provided away from each other in the horizontal direction at the same height. Together with lateral frame elements 3a and 3b, depth frame elements 4a and 4b form first frame part 2a provided in the lower section of frame 1.

Depth frame elements 4c and 4d are provided away from each other in the horizontal direction at the same height. Depth frame elements 4c and 4d are provided above depth frame elements 4a and 4b. Together with lateral frame elements 3c and 3d, depth frame elements 4c and 4d form second frame part 2b provided in the middle section of frame 1.

Depth frame elements 4e and 4f are provided away from each other in the horizontal direction at the same height. Depth frame elements 4e and 4f are provided above depth frame elements 4c and 4d. Together with lateral frame elements 3e and 3f, depth frame elements 4e and 4f form third frame part 2c provided in the upper section of frame 1.

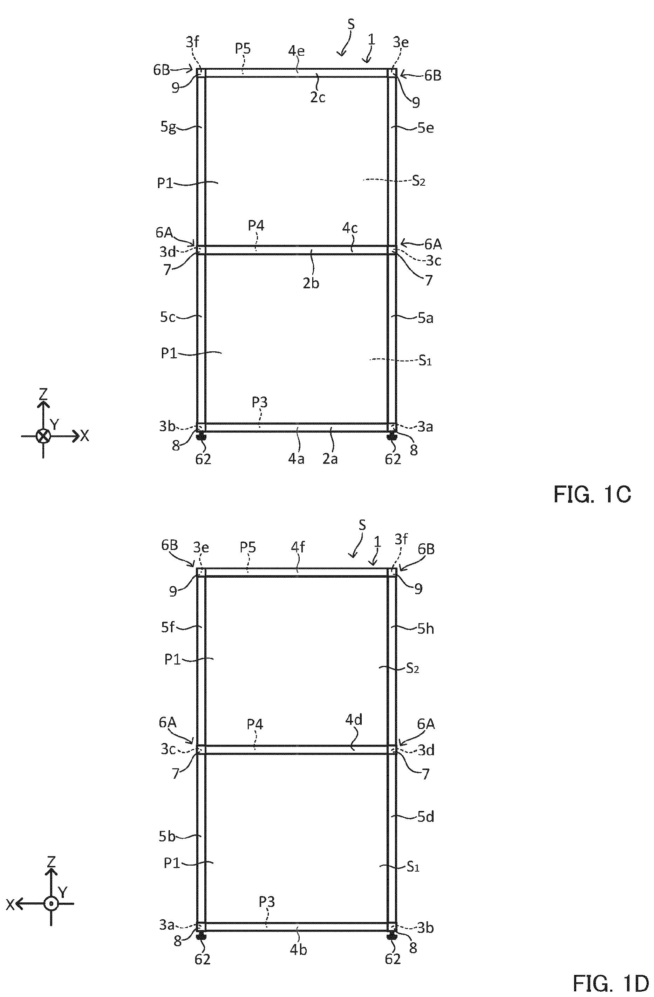

Note that in the present embodiment, the depth frame element is a single continuous tubular member. It should be noted that the depth frame element may be a plurality of tubular members connected in series. For example, the depth frame element may be composed of depth frame elements 4a to 4f illustrated in FIGS. 1C and 1D, and additional depth frame elements (not illustrated in the drawing) connected to the front end or rear end of depth frame elements 4a to 4f.

### Vertical Frame Element

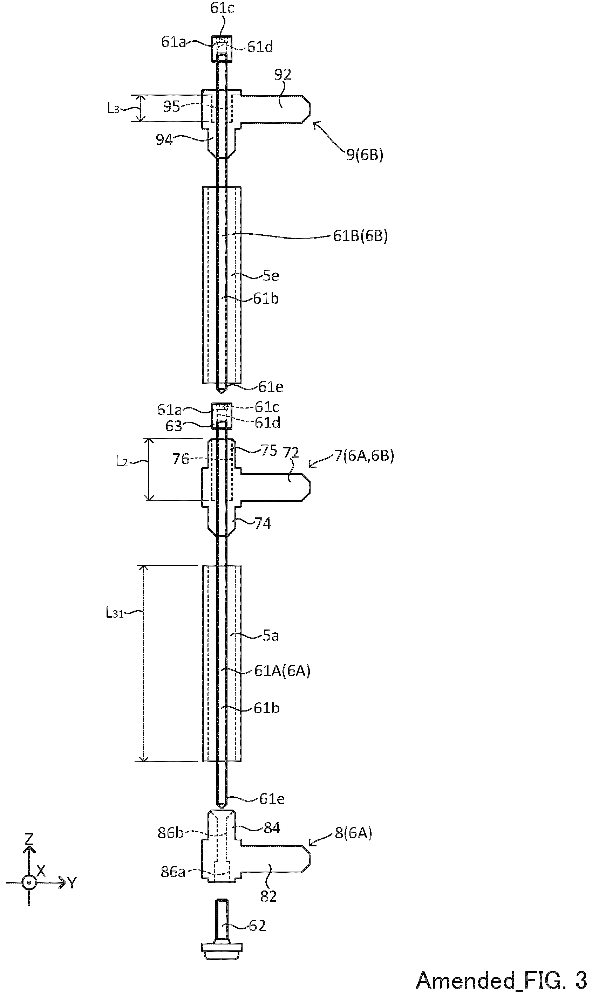

Next, vertical frame elements 5a to 5h are described with reference to FIGS. 1A to 1D, 7A and 7B. Each of vertical frame elements 5a to 5h is a tubular member that extends in the vertical direction and has a rectangular (in the present embodiment, square) shape in a cross-section taken along the XY plane. In the present embodiment, each of vertical frame elements 5a to 5h have the same length L₃₁ (see FIG. 3). Note that although not illustrated in the drawings, each of vertical frame elements 5a to 5h has a cross-sectional shape that is obtained by omitting placement plate part 31 from the cross-sectional shape of lateral frame element 3c illustrated in FIG. 7C.

Vertical frame elements 5a to 5d are provided at first corner part R1, second corner part R2, third corner part R3, and fourth corner part R4 of storage shelf S. Vertical frame elements 5a to 5d are provided between first frame part 2a and second frame part 2b so as to couple first frame part 2a and second frame part 2b. Specifically, vertical frame elements 5a to 5d couple first frame part 2a and second frame part 2b through frame element coupling device 6A described later.

Vertical frame elements 5e to 5h are provided above vertical frame elements 5a to 5d at first corner part R1, second corner part R2, third corner part R3, and fourth corner part R4 of storage shelf S. Vertical frame elements 5e to 5h are provided between second frame part 2b and third frame part 2c so as to couple second frame part 2b and third frame part 2c. Specifically, vertical frame elements 5e to 5h couple second frame part 2b and third frame part 2c through frame element coupling device 6B described later.

Note that in the present embodiment, the vertical frame element is a single continuous tubular member. It should be noted that the vertical frame element may be a plurality of tubular members connected in series. For example, the vertical frame element may be composed of vertical frame elements 5a to 5h illustrated in FIG. 1A, and additional vertical frame elements (not illustrated in the drawing) connected to the lower end or upper end of vertical frame elements 5a to 5h.

### First Frame Part

As illustrated in FIGS. 1A to 1D, first frame part 2a includes the above-described lateral frame elements 3a and 3b, the above-described depth frame elements 4a and 4b, and four lower joints 8 provided at first corner part R1 to fourth corner part R4.

Lateral frame elements 3a and 3b and depth frame elements 4a and 4b are coupled together in a rectangular frame shape with four lower joints 8. First frame part 2a having such a rectangular frame shape is provided in the lower section of storage shelf S. Lower joint 8 will be described later. Note that in the storage shelf, the first frame part means a frame part formed in a rectangular frame shape with the lateral frame element and the depth frame element provided at the lowermost portion.

### Second Frame Part

As illustrated in FIGS. 1A to 1D, second frame part 2b includes the above-described lateral frame elements 3c and 3d, the above-described depth frame elements 4c and 4d, and four middle joints 7 provided at first corner part R1 to fourth corner part R4.

Lateral frame elements 3c and 3d and depth frame elements 4c and 4d are coupled together in a rectangular frame shape with four middle joints 7. Second frame part 2b is provided in the middle section of storage shelf S. Second frame part 2b is coupled with first frame part 2a through frame element coupling device 6A. Middle joint 7 will be described later.

Note that in the storage shelf, the second frame part means a frame part formed in a rectangular frame shape with the lateral frame element and the depth frame element provided between the frame part (i.e., the first frame part) provided at the lowermost portion and the frame part provided at the uppermost portion (i.e., the third frame part described later). The number of the second frame parts differs depending on the number of sections in the vertical direction in the storage shelf. For example, in a case of a storage shelf with three sections in the vertical direction, the storage shelves include two frame parts.

### Third Frame Part

As illustrated in FIGS. 1A to 1D, third frame part 2c includes the above-described lateral frame elements 3e and 3f, the above-described depth frame elements 4e and 4f, and four upper joints 9 provided at first corner part R1 to fourth corner part R4.

Lateral frame elements 3e and 3f and depth frame elements 4e and 4f are coupled together in a rectangular frame shape with four upper joints 9. Third frame part 2c is provided in the upper section of storage shelf S. Third frame part 2c is coupled with second frame part 2b through frame element coupling device 6B. Upper joint 9 will be described later. Note that in the storage shelf, the third frame part means a frame part formed in a rectangular frame shape with the lateral frame element and the depth frame element provided at the uppermost portion.

### Frame Element Coupling Device

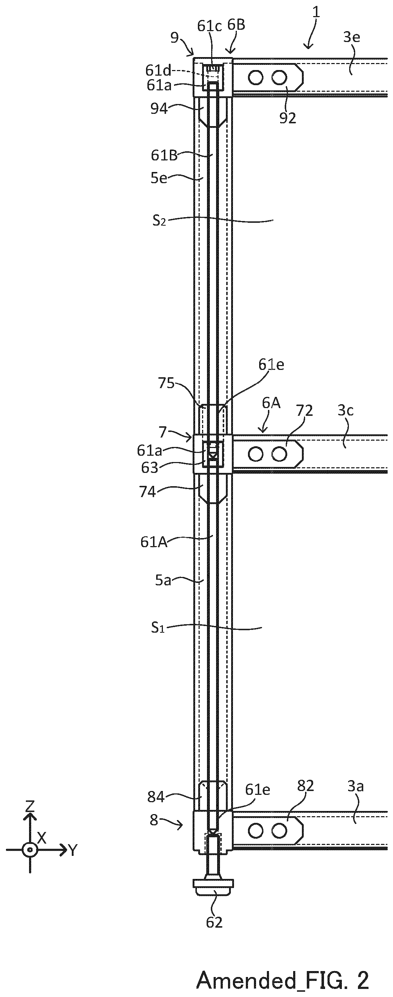

Each of frame element coupling devices 6A and 6B couples frame elements orthogonal to each other. Frame element coupling devices 6A and 6B are described below with reference to FIGS. 2 to 6B. Note that frame element coupling devices 6A and 6B are provided at first corner part R1 to fourth corner part R4 of storage shelf S. At each corner part of storage shelf S, frame element coupling device 6A is provided below frame element coupling device 6B. In the present embodiment, four frame element coupling devices 6A and four frame element coupling devices 6B are provided.

The following describes frame element coupling devices 6A and 6B provided at a first corner part (the X part illustrated in FIG. 1A) among four frame element coupling devices 6A and four frame element coupling devices 6B. The description for frame element coupling devices 6A and 6B provided at first corner part R1 may be appropriately applied to frame element coupling devices 6A and 6B provided at second corner part R2 to fourth corner part R4.

### First Frame Element Coupling Device

First, frame element coupling device 6A (also referred to as a first frame element coupling device) is described. Frame element coupling device 6A couples first frame part 2a and second frame part 2b.

Frame element coupling device 6A includes middle joint 7, lower joint 8, and coupling member 61A.

### Middle Joint

Middle joint 7 is described with reference to FIGS. 1A to 3, 5A, 5B, 7A and 7B. Middle joint 7 includes base part 71, first horizontal fixing part 72, second horizontal fixing part 73, first perpendicular fixing part 74, and second perpendicular fixing part 75. Note that in frame element coupling device 6A, middle joint 7 corresponds to a joint member.

### Base Part of Middle Joint

Base part 71 is a cube. Note that the shape of base part 71 is not limited to the illustration in the drawing. For example, base part 71 may have a rectangular cuboid shape or a cylindrical shape.

Base part 71 includes first surface 7a and second surface 7b that are opposite to each other in the horizontal direction. In the case of frame element coupling device 6A provided at first corner part R1, first surface 7a corresponds to the right side surface of base part 71, and second surface 7b corresponds to the left side surface of base part 71.

Base part 71 includes third surface 7c and fourth surface 7d that are opposite to each other in the front-rear direction. In the case of frame element coupling device 6A provided at first corner part R1, third surface 7c corresponds to the front side surface of base part 71, and fourth surface 7d corresponds to the rear side surface of base part 71.

Base part 71 includes fifth surface 7e and sixth surface 7f that are opposite to each other in the vertical direction. In the case of frame element coupling device 6A provided at first corner part R1, fifth surface 7e corresponds to the upper side surface of base part 71, and sixth surface 7f corresponds to the lower side surface of base part 71.

### First Horizontal Fixing Part of Middle Joint

First horizontal fixing part 72 is provided at first surface 7a of base part 71. First horizontal fixing part 72 extends to the right side (also referred to as one side in the horizontal direction) from base part 71. First horizontal fixing part 72 has an octagonal external shape in a cross-section taken along the XZ plane. Note that the cross-sectional shape of first horizontal fixing part 72 is not limited to the octagonal shape, and may be a quadrangular shape with chamfered corners, for example.

First horizontal fixing part 72 is inserted in the left end portion of lateral frame element 3c (also referred to as a second frame element or a third frame element). The external shape of first horizontal fixing part 72 is preferably a shape that can be inserted to the left end portion of lateral frame element 3c with no gap therebetween.

Note that from the viewpoint of improving mountability, the external shape of first horizontal fixing part 72 is preferably a shape that defines predetermined gaps in the front-rear direction and the vertical direction between the outer peripheral surface of first horizontal fixing part 72 and the inner peripheral surface of the left end portion of lateral frame element 3c. It should be noted that in the mounted state, first horizontal fixing part 72 and lateral frame element 3c are fixed with no rattle by fastening member 37 (see FIG. 5A). In frame element coupling device 6A, first horizontal fixing part 72 corresponds to an insertion part.

First horizontal fixing part 72 includes first through hole 72b that extends through first horizontal fixing part 72 in the front-rear direction. First through hole 72b includes large diameter hole part 72c provided on the inside (also referred to as the rear side), and first female screw part 72d provided on the outside (also referred to as the front side) of large diameter hole part 72c. First female screw part 72d is smaller than large diameter hole part 72c.

First horizontal fixing part 72 includes second female screw part 72e that extends through first horizontal fixing part 72 in the front-rear direction. In first horizontal fixing part 72, second female screw part 72e is provided at a position closer to base part 71 than first through hole 72b (in the present embodiment, the left side relative to first through hole 72b).

### Second Horizontal Fixing Part of Middle Joint

Second horizontal fixing part 73 is provided at fourth surface 7d of base part 71. Second horizontal fixing part 73 extends to the rear side (also referred to as one side in the front-rear direction) from base part 71.

Second horizontal fixing part 73 has an octagonal external shape in a cross-section taken along the YZ plane. Note that the cross-sectional shape of second horizontal fixing part 73 is not limited to the octagonal shape, and may be a quadrangular shape with chamfered corners, for example.

Second horizontal fixing part 73 is inserted to the front end portion of depth frame element 4c (also referred to as a second frame element or a third frame element). The external shape of second horizontal fixing part 73 is preferably a shape that can be inserted to the front end portion of depth frame element 4c with no gap therebetween.

Note that from the viewpoint of improving mountability, the external shape of second horizontal fixing part 73 is preferably a shape that defines predetermined gaps in the horizontal direction and the vertical direction between the outer peripheral surface of second horizontal fixing part 73 and the inner peripheral surface of the end portion of depth frame element 4c. It should be noted that in the mounted state, second horizontal fixing part 73 and depth frame element 4c are fixed with no rattle by fastening member 47 (see FIG. 5A). In frame element coupling device 6A, second horizontal fixing part 73 corresponds to an insertion part.

Second horizontal fixing part 73 includes first through hole 73b that extends through second horizontal fixing part 73 in the horizontal direction. First through hole 73b includes large diameter hole part 73c provided on the inside (also referred to as the right side), and first female screw part 73d provided on the outside (also referred to as the left side) of large diameter hole part 73c. First female screw part 73d is smaller than large diameter hole part 73c.

Second horizontal fixing part 73 includes second female screw part 73e that extends through second horizontal fixing part 73 in the horizontal direction. In second horizontal fixing part 73, second female screw part 73e is provided at a position closer to base part 71 than first through hole 73b (in the present embodiment, the front side relative to first through hole 73b).

### First Perpendicular Fixing Part of Middle Joint

First perpendicular fixing part 74 is provided at sixth surface 7f of base part 71. First perpendicular fixing part 74 extends to the bottom side (also referred to as one side in the vertical direction) from base part 71.

First perpendicular fixing part 74 has an octagonal external shape in a cross-section taken along the XY plane. Note that the cross-sectional shape of first perpendicular fixing part 74 is not limited to the octagonal shape, and may be a quadrangular shape with chamfered corners, for example.

First perpendicular fixing part 74 is inserted to the upper end portion of vertical frame element 5a (also referred to as a first frame element). The external shape of first perpendicular fixing part 74 is preferably a shape that can be inserted to the upper end portion of vertical frame element 5a with no gap therebetween.

Note that from the viewpoint of improving mountability, the external shape of first perpendicular fixing part 74 is preferably a shape that defines predetermined gaps in the front-rear direction and the horizontal direction between the outer peripheral surface of first perpendicular fixing part 74 and the inner peripheral surface of the upper end portion of vertical frame element 5a. It should be noted that in the mounted state, first perpendicular fixing part 74 and vertical frame element 5a are fixed with no rattle by frame element coupling device 6A.

### Second Perpendicular Fixing Part of Middle Joint

Second perpendicular fixing part 75 is provided at fifth surface 7e of base part 71. Second perpendicular fixing part 75 extends to the upper side (also referred to as the other side in the vertical direction) from base part 71.

Second perpendicular fixing part 75 has an octagonal external shape in a cross-section taken along the XY plane. Note that the cross-sectional shape of second perpendicular fixing part 75 is not limited to the octagonal shape, and may be a quadrangular shape with chamfered corners, for example.

Second perpendicular fixing part 75 is inserted in the lower end portion of vertical frame element 5e. The external shape of second perpendicular fixing part 75 is preferably a shape that can be inserted to the lower end portion of vertical frame element 5e with no gap therebetween.

Note that from the viewpoint of improving mountability, the external shape of second perpendicular fixing part 75 is preferably a shape that defines predetermined gaps in the front-rear direction and the horizontal direction between the outer peripheral surface of second perpendicular fixing part 75 and the inner peripheral surface of the lower end portion of vertical frame element 5e. It should be noted that in the mounted state, second perpendicular fixing part 75 and vertical frame element 5e are fixed with no rattle by frame element coupling device 6B described later.

In addition, middle joint 7 includes through hole 76 that extends through first perpendicular fixing part 74, base part 71, and second perpendicular fixing part 75 in the vertical direction. The upper end of through hole 76 opens at the end of second perpendicular fixing part 75, and the lower end of through hole 76 opens at the end of first perpendicular fixing part 74.

Through hole 76 includes large diameter through hole 76a provided at least at an upper end portion, and small diameter through hole 76b provided below large diameter through hole 76a. Large diameter through hole 76a and small diameter through hole 76b are connected together with annular step 76c that faces upward. The length of large diameter through hole 76a in the vertical direction is L₂.

As illustrated in FIGS. 1A and 1B, middle joint 7 described above couples vertical frame element 5a, lateral frame element 3c, depth frame element 4c, and vertical frame element 5e.

Specifically, first horizontal fixing part 72 of middle joint 7 is inserted in the left end portion of lateral frame element 3c. First horizontal fixing part 72 is fixed to lateral frame element 3c by fastening member 37 such as a bolt inserted in first through hole 72b.

Now the method of fixing first horizontal fixing part 72 and lateral frame element 3c is described. First, as illustrated in FIG. 7A, fastening member 37 is inserted to first through hole 72b of first horizontal fixing part 72. Specifically, fastening member 37 is inserted to first through hole 72b from the opening on the rear side (from large diameter hole part 72c side).

Next, to a position where head part 371 of fastening member 37 does not protrude from large diameter hole part 72c, the male screw part of fastening member 37 is threadedly engaged with first female screw part 72d of first through hole 72b. Next, as illustrated in FIG. 7B, first horizontal fixing part 72 is inserted to the left end portion of lateral frame element 3c. In this state, head part 371 of fastening member 37 and tool-through hole 33 of lateral frame element 3c are aligned with each other.

Finally, tool 64 such as a driver (see FIG. 7B) is inserted to tool-through hole 33 to rotate fastening member 37 in a predetermined direction in lateral frame element 3c. This rotation displaces fastening member 37 in a direction in which it is removed from first female screw part 72d. Then, head part 371 of fastening member 37 makes contact with the inner surface of inner wall part 32 of lateral frame element 3c, and the outer surface (in the present embodiment, the front side surface) of first horizontal fixing part 72 makes contact with receiving surface 36 of external wall part 35 of lateral frame element 3c. As a result, fastening member 37 and first horizontal fixing part 72 are stretched between inner wall part 32 and external wall part 35 in lateral frame element 3c. In this manner, first horizontal fixing part 72 is fixed to lateral frame element 3c.

Note that the male screw part of fastening member 37 may be a right-handed screw or a left-handed screw. In the case where the male screw part of fastening member 37 is a left-handed screw, the user can fix first horizontal fixing part 72 and lateral frame element 3c by rotating tool 64 clockwise. Typically, the fixing operation is performed by rotating a tool clockwise, and therefore the user can perform the fixing operation without feeling of wrongness when a left-handed screw is used as the male screw part of fastening member 37.

In addition, second horizontal fixing part 73 of middle joint 7 is inserted to the front end portion of depth frame element 4c. Second horizontal fixing part 73 is fixed to depth frame element 4c by fastening member 47 (see FIG. 5A) such as a bolt inserted in first through hole 73b. Note that the method of fixing second horizontal fixing part 73 and depth frame element 4c is identical to that of first horizontal fixing part 72 and lateral frame element 3c, and therefore the description thereof is omitted.

First perpendicular fixing part 74 of middle joint 7 is inserted in the upper end portion of vertical frame element 5a.

Second perpendicular fixing part 75 of middle joint 7 is inserted in the lower end portion of vertical frame element 5e.

Note that the above-described middle joint 7 includes fixing parts (i.e., first horizontal fixing part 72, second horizontal fixing part 73, first perpendicular fixing part 74, and second perpendicular fixing part 75) extending in four directions from base part 71. It should be noted that the number of the fixing parts of middle joint 7 is not limited to the case of the present embodiment. For example, middle joint 7 may include fixing parts extending in six directions from base part 71. In addition, for example, in the case where middle joint 7 is incorporated in a separator, middle joint 7 may include only fixing parts extending in two directions (e.g., the vertical direction and the horizontal direction) orthogonal to each other from base part 71.

### Lower Joint

Next, lower joint 8 is described with reference to FIGS. 1A to 3, 6A and 6B. Lower joint 8 includes base part 81, first horizontal fixing part 82, second horizontal fixing part 83, and first perpendicular fixing part 84. Note that in frame element coupling device 6A, lower joint 8 corresponds to an anchor member.

Base part 81 is a cube. Note that the shape of base part 71 is not limited to the illustration in the drawing. For example, base part 81 may have a rectangular cuboid shape or a cylindrical shape.

Base part 81 includes first surface 8a and second surface 8b that are opposite to each other in the horizontal direction. In the present embodiment, first surface 8a corresponds to the right side surface of base part 81, and second surface 8b corresponds to the left side surface of base part 81.

Base part 81 includes third surface 8c and fourth surface 8d that are opposite to each other in the front-rear direction. In the present embodiment, third surface 8c corresponds to the front side surface of base part 81, and fourth surface 8d corresponds to the rear side surface of base part 81.

Base part 81 includes fifth surface 8e and sixth surface 8f that are opposite to each other in the vertical direction. In the present embodiment, fifth surface 8e corresponds to the upper side surface of base part 81, and sixth surface 8f corresponds to the lower side surface of base part 81.

### First Horizontal Fixing Part of Lower Joint

First horizontal fixing part 82 is provided at first surface 8a of base part 81. First horizontal fixing part 82 extends to the right side (also referred to as one side in the horizontal direction) from base part 81.

First horizontal fixing part 82 has an octagonal external shape in a cross-section taken along the XZ plane. Note that the cross-sectional shape of first horizontal fixing part 82 is not limited to the octagonal shape, and may be a quadrangular shape with chamfered corners, for example.

First horizontal fixing part 82 is inserted in the left end portion of lateral frame element 3a (also referred to as a fourth frame element). The external shape of first horizontal fixing part 82 is preferably a shape that can be inserted to the end portion of lateral frame element 3a with no gap therebetween.

Note that from the viewpoint of improving mountability, the external shape of first horizontal fixing part 82 is preferably a shape that defines predetermined gaps in the front-rear direction and the vertical direction between the outer peripheral surface of first horizontal fixing part 82 and the inner peripheral surface of the left end portion of lateral frame element 3a. It should be noted that in the mounted state, first horizontal fixing part 82 and lateral frame element 3a are fixed with no rattle by fastening member 37 (see FIG. 6A).

First horizontal fixing part 82 includes first through hole 82c that extends through first horizontal fixing part 82 in the front-rear direction. First through hole 82c includes large diameter hole part 82d provided on the inside (also referred to as the rear side), and first female screw part 82e provided on the outside (also referred to as the front side) of large diameter hole part 82d. First female screw part 82e is smaller than large diameter hole part 82d.

First horizontal fixing part 82 includes second female screw part 82f that extends through first horizontal fixing part 82 in the front-rear direction. In first horizontal fixing part 82, second female screw part 82f is provided at a position closer to base part 81 than first through hole 82c (in the present embodiment, on the left side relative to first through hole 82c).

### Second Horizontal Fixing Part of Lower Joint

Second horizontal fixing part 83 is provided at fourth surface 8d of base part 81. Second horizontal fixing part 83 extends to the rear side (also referred to as one side in the front-rear direction) from base part 81.

Second horizontal fixing part 83 has an octagonal external shape in a cross-section taken along the YZ plane. Note that the cross-sectional shape of second horizontal fixing part 83 is not limited to the octagonal shape, and may be a quadrangular shape with chamfered corners, for example.

Second horizontal fixing part 83 is inserted in the front end portion of depth frame element 4a (also referred to as a fourth frame element). The external shape of second horizontal fixing part 83 is preferably a shape that can be inserted to the end portion of depth frame element 4a with no gap therebetween.

Note that from the viewpoint of improving mountability, the external shape of second horizontal fixing part 83 is preferably a shape that defines predetermined gaps in the horizontal direction and the vertical direction between the outer peripheral surface of second horizontal fixing part 83 and the inner peripheral surface of the front end portion of depth frame element 4a. It should be noted that in the mounted state, second horizontal fixing part 83 and depth frame element 4a are fixed with no rattle by fastening member 47 (see FIG. 6A).

Second horizontal fixing part 83 includes first through hole 83b that extends through second horizontal fixing part 83 in the horizontal direction. First through hole 83b includes large diameter hole part 83c provided on the inside (also referred to as the right side), and first female screw part 83d provided on outside (also referred to as the left side) of large diameter hole part 83c. First female screw part 83d is smaller than large diameter hole part 83c.

Second horizontal fixing part 83 includes second female screw part 83e that extends through second horizontal fixing part 83 in the horizontal direction. In second horizontal fixing part 83, second female screw part 83e is provided at a position closer to base part 81 than first through hole 83b (in the present embodiment, on the front side relative to first through hole 83b).

### First Perpendicular Fixing Part of Lower Joint

First perpendicular fixing part 84 is provided at fifth surface 8e of base part 81. First perpendicular fixing part 84 extends to the upper side (also referred to as the other side in the vertical direction) from base part 81.

First perpendicular fixing part 84 has an octagonal external shape in a cross-section taken along the XY plane. Note that the cross-sectional shape of first perpendicular fixing part 84 is not limited to the octagonal shape, and may be a quadrangular shape with chamfered corners, for example.

First perpendicular fixing part 84 is inserted in the lower end portion of vertical frame element 5a. The external shape of first perpendicular fixing part 84 is preferably a shape that can be inserted to the lower end portion of vertical frame element 5a with no gap therebetween.

Note that from the viewpoint of improving mountability, the external shape of first perpendicular fixing part 84 is preferably a shape that defines predetermined gaps in the front-rear direction and the horizontal direction between the outer peripheral surface of first perpendicular fixing part 84 and the inner peripheral surface of the lower end portion of vertical frame element 5a. It should be noted that in the mounted state, first perpendicular fixing part 84 and vertical frame element 5a are fixed with no rattle by frame element coupling device 6A.

**In** addition, lower joint 8 includes through hole 86 that extends through first perpendicular fixing part 84 and base part 81 in the vertical direction. The upper end of through hole 86 opens at the end of first perpendicular fixing part 84, and the lower end of through hole 86 opens at sixth surface 8f of base part 81.

Through hole 86 includes large diameter female screw part 86a provided at the lower end portion, and small diameter female screw part 86b provided above large diameter female screw part 86a.

As illustrated in FIGS. 1A and 1B, the above-described lower joint 8 couples vertical frame element 5a, lateral frame element 3a and depth frame element 4a.

Specifically, first horizontal fixing part 82 of lower joint 8 is inserted in the left end portion of lateral frame element 3a. First horizontal fixing part 82 is fixed to lateral frame element 3a by fastening member 37 such as a bolt (see FIG. 6A) inserted in first through hole 82c. Note that the method of fixing first horizontal fixing part 82 and lateral frame element 3a is identical to that of first horizontal fixing part 72 of middle joint 7 and lateral frame element 3c, and therefore the description thereof is omitted.

In addition, second horizontal fixing part 83 of lower joint 8 is inserted in the front end portion of depth frame element 4a. Second horizontal fixing part 83 is fixed to depth frame element 4a by fastening member 47 such as a bolt inserted in first through hole 83b (see FIG. 6A). Note that the method of fixing second horizontal fixing part 83 and depth frame element 4a is identical to that of first horizontal fixing part 72 of middle joint 7 and lateral frame element 3c, and therefore the description thereof is omitted.

First perpendicular fixing part 84 is inserted in the lower end portion of vertical frame 5a.

Note that the above-described lower joint 8 includes fixing parts (i.e., first horizontal fixing part 82, second horizontal fixing part 83, and first perpendicular fixing part 84) extending in three directions from base part 81. It should be noted that the number of fixing parts of lower joint 8 is not limited to the case of the present embodiment. For example, lower joint 8 may include fixing parts extending in five directions other than the bottom side from base part 81. **In** addition, for example, in the case where lower joint 8 is incorporated in a separator, lower joint 8 may include only fixing parts extending two directions (e.g., upward direction and the horizontal direction) orthogonal to each other from base part 81.

### Coupling Member

Next, coupling member 61A is described with reference to FIGS. 2 and 3. Coupling member 61A includes head part 61a and shaft part 61b. Head part 61a and shaft part 61b are integrally provided in such a manner that they cannot be separated from each other. Head part 61a and shaft part 61b are integrally molded by casting, for example. Head part 61a and shaft part 61b may be integrally molded by welding or the like after molded as separate members. Note that head part 61a and shaft part 61b may be provided in such a manner that they can be separated from each other.

Head part 61a is a so-called hexagonal round nut. Specifically, head part 61a is a cylindrical member having an outer peripheral surface of a cylindrical surface shape. The inner peripheral surface of head part 61a includes tool locking part 61c having a hexagonal shape at the upper end portion. The inner peripheral surface of head part 61a includes female screw part 61d below tool locking part 61c.

Shaft part 61b is a screw member having male screw part 61e at the outer peripheral surface. Male screw part 61e is provided over the entire length of shaft part 61b. The base end portion (also referred to as an upper end portion) of shaft part 61b is integrally connected with head part 61a. Note that male screw part 61e may be provided at only the end portion (lower end portion) of shaft part 61b.

Now an assembling process of frame element coupling device 6A is described. Note that in the following description for the assembling process of frame element coupling device 6A, only a process of mounting frame element coupling device 6A to vertical frame element 5a provided at the first corner part is described.

In the assembling process of frame element coupling device 6A, first, the operator assembles first frame part 2a and second frame part 2b as illustrated in FIGS. 1A to 1D.

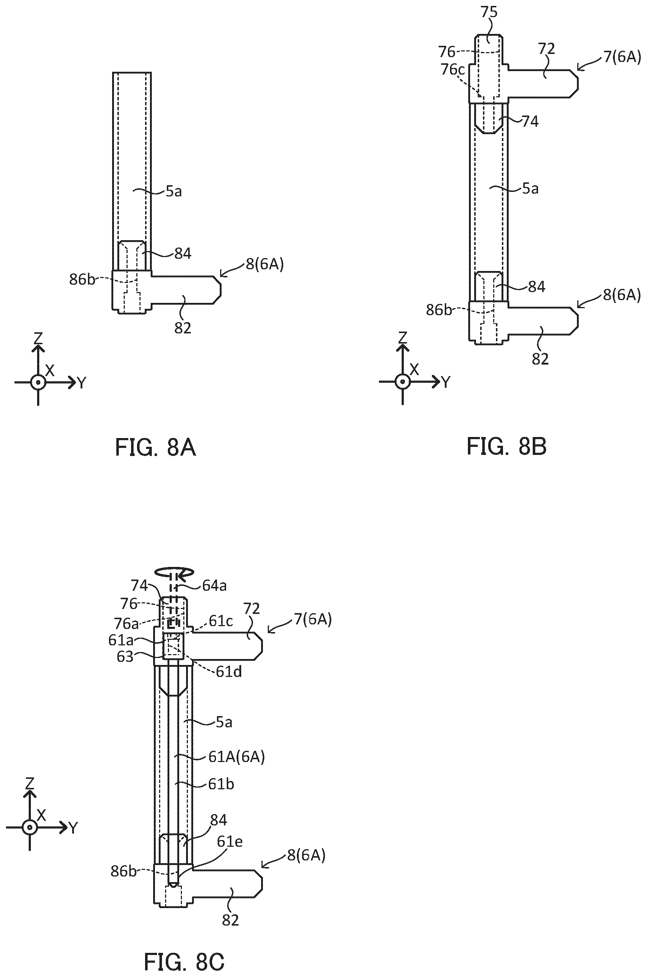

Next, as illustrated in FIG. 8A, vertical frame element 5a is mounted to first perpendicular fixing part 84 of lower joint 8 of first frame part 2a. Note that the same applies to the second corner part to the fourth corner part.

Next, as illustrated in FIG. 8B, the operator inserts first perpendicular fixing part 74 of middle joint 7 of second frame part 2b to the upper end portion of vertical frame element 5a. Note that the same applies to the second corner part to the fourth corner part.

Next, as illustrated in FIG. 8C, the operator inserts coupling member 61A to through hole 76 of middle joint 7 from above.

Next, with tool 64a engaged with head part 61a of coupling member 61A, the operator rotates coupling member 61A to threadedly engage the end portion of coupling member 61A with small diameter female screw part 86b of lower joint 8 from above. The operator rotates coupling member 61A until the force of middle joint 7 and lower joint 8 sandwiching vertical frame element 5a in the vertical direction is set to a predetermined value or greater. Note that the same applies to the second corner part to the fourth corner part.

At the time when the above-described sandwiching force is set to the predetermined value, the assembling process of frame element coupling device 6A is completed. **In** this manner, on the basis of its rotation, coupling member 61A can adjust the force of sandwiching vertical frame element 5a in the vertical direction (also referred to as a first direction) between middle joint 7 (also referred to simply as a joint member) and lower joint 8 (also referred to as an anchor member).

**In** the state where it is assembled through the above-described assembling process (hereinafter referred to as "assembled state"), the end portion of coupling member 61A is threadedly engaged with small diameter female screw part 86b of lower joint 8.

**In** addition, in the assembled state, the middle part of coupling member 61A is inserted in vertical frame element 5a. **In** addition, in the assembled state, the base end portion (i.e., head part 61a) of coupling member 61A is disposed at large diameter through hole 76a of middle joint 7. In addition, in the assembled state, the seat surface of head part 61a is in contact with step 76c of middle joint 7 (see FIG. 8B).

In addition, in the assembled state, coupling member 61A applies a downward force to middle joint 7 with the seat surface of head part 61a therebetween. In addition, in the assembled state, coupling member 61A applies an upward force to lower joint 8 on the basis of the thread-engagement between the end portion of shaft part 61b and small diameter female screw part 86b of lower joint 8. On the basis of the downward force and upward force, middle joint 7 and lower joint 8 sandwich vertical frame element 5a in the vertical direction.

This configuration is effective for reducing the rattle between middle joint 7 and lower joint 8, and vertical frame element 5a. In addition, with middle joint 7 and lower joint 8 firmly fixed to vertical frame element 5a, lateral frame element 3a and depth frame element 4a are firmly fixed to vertical frame element 5a with lower joint 8 therebetween. In addition, lateral frame element 3c and depth frame element 4c are firmly fixed to vertical frame element 5a with middle joint 7 therebetween.

Note that as illustrated in FIG. 3, adjuster 62 is threadedly engaged with large diameter female screw part 86a of lower joint 8. On the basis of the thread-engagement with large diameter female screw part 86a, adjuster 62 can adjust the protruding length from large diameter female screw part 86a.

### Second Frame Element Coupling Device

Frame element coupling device 6B (also referred to as a second frame element coupling device) is described below with reference to FIGS. 2 to 4B.

Frame element coupling device 6B includes upper joint 9, coupling member 61B, and anchor member 63. Coupling member 61B is identical to coupling member 61A of frame element coupling device 6 described above, and therefore the description thereof is omitted. In addition, anchor member 63 is coupling member 61A of frame element coupling device 6A. Note that in frame element coupling device 6B, upper joint 9 corresponds to a joint member.

### Upper Joint

Upper joint 9 is described below with reference to FIGS. 1A to 4B. Upper joint 9 includes base part 91, first horizontal fixing part 92, second horizontal fixing part 93, and first perpendicular fixing part 94.

Base part 91 is a cube. Note that the shape of base part 91 is not limited to the illustration in the drawing. For example, base part 91 may have a rectangular cuboid shape or a cylindrical shape.

Base part 91 includes first surface 9a and second surface 9b that are opposite to each other in the horizontal direction. In the case of frame element coupling device 6B provided at first corner part R1, first surface 9a corresponds to the right side surface of base part 91, and second surface 9b corresponds to the left side surface of base part 91.

Base part 91 includes third surface 9c and fourth surface 9d that are opposite to each other in the front-rear direction. In the case of frame element coupling device 6B provided at first corner part R1, third surface 9c corresponds to the front side surface of base part 91, and fourth surface 9d corresponds to the rear side surface of base part 91.

Base part 91 includes fifth surface 9e and sixth surface 9f that are opposite to each other in the vertical direction. In the case of frame element coupling device 6B provided at first corner part R1, fifth surface 9e corresponds to the upper side surface of base part 91, and sixth surface 9f corresponds to the lower side surface of base part 91.

### First Horizontal Fixing Part of Upper Joint

First horizontal fixing part 92 is provided at first surface 9a of base part 91. First horizontal fixing part 92 extends to the right side (also referred to as one side in the horizontal direction) from base part 91.

First horizontal fixing part 92 has an octagonal external shape in a cross-section taken along the XZ plane. Note that the cross-sectional shape of first horizontal fixing part 92 is not limited to the octagonal shape, and may be a quadrangular shape with chamfered corners, for example.

First horizontal fixing part 92 is inserted in the left end portion (also referred to as one end portion) of lateral frame element 3e. Preferably, first horizontal fixing part 92 is inserted to the left end portion of lateral frame element 3e with no gap.

Note that from the viewpoint of improving mountability, the external shape of first horizontal fixing part 92 is preferably a shape that defines predetermined gaps in the front-rear direction and the vertical direction between the outer peripheral surface of first horizontal fixing part 92 and the inner peripheral surface of the left end portion of lateral frame element 3e. It should be noted that in the mounted state, first horizontal fixing part 92 and lateral frame element 3e are fixed with no rattle by fastening member 37 (see FIG. 4A). In frame element coupling device 6B, first horizontal fixing part 92 corresponds to an insertion part.

First horizontal fixing part 92 includes first through hole 92b that extends through first horizontal fixing part 92 in the front-rear direction. First through hole 92b includes large diameter hole part 92c provided on the inside (also referred to as the rear side), and first female screw part 92d provided on the outside (also referred to as the front side) of large diameter hole part 92c. First female screw part 92d is smaller than large diameter hole part 92c.

First horizontal fixing part 92 includes second female screw part 92e that extends through first horizontal fixing part 92 in the front-rear direction. In first horizontal fixing part 92, second female screw part 92e is provided at a position closer to base part 91 than first through hole 92b (in the present embodiment, on the left side relative to base part 91).

### Second Horizontal Fixing Part of Upper Joint

Second horizontal fixing part 93 is provided at fourth surface 9d of base part 91. Second horizontal fixing part 93 extends to the rear side (also referred to as one side in the front-rear direction) from base part 91.

Second horizontal fixing part 93 has an octagonal external shape in a cross-section taken along the YZ plane. Note that the cross-sectional shape of second horizontal fixing part 93 is not limited to the octagonal shape, and may be a quadrangular shape with chamfered corners, for example.

Second horizontal fixing part 93 is inserted to the front end portion of depth frame element 4e. The external shape of second horizontal fixing part 93 is preferably a shape that can be inserted to the front end portion of depth frame element 4e with no gap therebetween.

Note that from the viewpoint of improving mountability, the external shape of second horizontal fixing part 93 is preferably a shape that defines predetermined gaps in the horizontal direction and the vertical direction between the outer peripheral surface of second horizontal fixing part 93 and the inner peripheral surface of the front end portion of depth frame element 4e. It should be noted that in the mounted state, second horizontal fixing part 93 and depth frame element 4e are fixed with no rattle by fastening member 47 (see FIG. 4A). In frame element coupling device 6B, second horizontal fixing part 93 corresponds to an insertion part.

Second horizontal fixing part 93 includes first through hole 93b that extends through second horizontal fixing part 93 in the horizontal direction. First through hole 93b includes large diameter hole part 93c provided on the inside (also referred to as the right side), and first female screw part 93d is disposed on the outside (also referred to as the left side) of large diameter hole part 93c. First female screw part 93d is smaller than large diameter hole part 93c.

Second horizontal fixing part 93 includes second female screw part 93e that extends through second horizontal fixing part 93 in the horizontal direction. In second horizontal fixing part 93, second female screw part 93e is provided at a position closer to base part 91 than first through hole 93b (in the present embodiment, on the front side relative to first through hole 93b).

### First Perpendicular fixing Part of Upper Joint

First perpendicular fixing part 94 is provided at sixth surface 9f of base part 91. First perpendicular fixing part 94 extends to the bottom side (also referred to as one side in the vertical direction) from base part 91.

First perpendicular fixing part 94 has an octagonal external shape in a cross-section taken along the XY plane. Note that the cross-sectional shape of first perpendicular fixing part 94 is not limited to the octagonal shape, and may be a quadrangular shape with chamfered corners, for example.

First perpendicular fixing part 94 is inserted to the upper end portion of vertical frame element 5e. The external shape of first perpendicular fixing part 94 is preferably a shape that can be inserted to the upper end portion of vertical frame element 5e with no gap therebetween.

Note that from the viewpoint of improving mountability, the external shape of first perpendicular fixing part 94 is preferably a shape that defines predetermined gaps in the front-rear direction and the horizontal direction between the outer peripheral surface of first perpendicular fixing part 94 and the inner peripheral surface of the upper end portion of vertical frame element 5e. It should be noted that in the mounted state, first perpendicular fixing part 94 and vertical frame element 5e are fixed with no rattle by frame element coupling device 6B.

In addition, upper joint 9 includes through hole 95 that extends through first perpendicular fixing part 94 and base part 91 in the vertical direction. The upper end of through hole 95 opens at fifth surface 9e of base part 91, and the lower end of through hole 95 opens at the end of first perpendicular fixing part 94.

Through hole 95 includes large diameter hole part 95a provided at the upper end portion, and small diameter hole part 95b provided below large diameter hole part 95a. Large diameter hole part 95a and small diameter hole part 95b are connected together with annular step 95c that faces upward. The vertical length of large diameter hole part 95a is L₃ (see FIG. 3).

The vertical length L₃ of large diameter hole part 95a is smaller than the vertical length L₂ of large diameter through hole 76a of middle joint 7. By appropriately control the relationship between the vertical length L₃ and the vertical length L₂, the vertical length between first frame part 2a and second frame part 2b and the vertical length between second frame part 2b and third frame part 2c can be set to the values equal to each other. As a result, vertical frame elements 5a to 5d and vertical frame elements 5e to 5h have the same vertical length, and thus commonality of vertical frame elements 5a to 5h can be achieved. In addition, coupling member 61A and coupling member 61B have the same vertical length, and thus commonality of coupling members 61A and 61B can be achieved.

Upper joint 9 as described above couples vertical frame element 5e, lateral frame element 3e and depth frame element 4e as illustrated in FIGS. 1A and 1B.

Specifically, first horizontal fixing part 92 of upper joint 9 is inserted in the left end portion of lateral frame element 3e. First horizontal fixing part 92 is fixed to lateral frame element 3e by fastening member 37 (see FIG. 4A) such as a bolt inserted in first through hole 92b. Note that the method of fixing first horizontal fixing part 92 and lateral frame element 3e is identical to that of first horizontal fixing part 72 of middle joint 7 and lateral frame element 3c, and therefore the description thereof is omitted.

In addition, second horizontal fixing part 93 of upper joint 9 is inserted in the front end portion of depth frame element 4e. Second horizontal fixing part 93 is fixed to depth frame element 4e by fastening member 47 such as a bolt inserted in first through hole 93b (see FIG. 4A). Note that the method of fixing second horizontal fixing part 93 and depth frame element 4e is identical to that of first horizontal fixing part 72 of middle joint 7 and lateral frame element 3c, and therefore the description thereof is omitted.

First perpendicular fixing part 94 of upper joint 9 is inserted in the upper end portion of vertical frame element 5e.

Note that upper joint 9 includes fixing parts (i.e., first horizontal fixing part 92, second horizontal fixing part 93, and first perpendicular fixing part 94) extending in three directions from base part 91. It should be noted that the number of the fixing parts of upper joint 9 is not limited in the present embodiment. For example, upper joint 9 may include fixing parts extending in five directions other than the upper direction from base part 91. In addition, for example, in the case where upper joint 9 is incorporated in a separator, upper joint 9 may include only fixing parts extending in two directions (e.g., lower direction and the horizontal direction) orthogonal to each other from base part 91.

In frame element coupling device 6B having the above-mentioned configuration, coupling member 61B couples upper joint 9 (also referred to simply as a joint member) provided at the upper end of vertical frame element 5e, and head part 61a (also referred to as an anchor member) of coupling member 61A of frame element coupling device 6A.

Specifically, the end portion of coupling member 61B (i.e., the end portion of shaft part 61b) is coupled with coupling member 61A of frame element coupling device 6A. Specifically, the end portion of coupling member 61B is threadedly engaged with female screw part 61d of head part 61a of coupling member 61A.

In addition, the middle part of coupling member 61B is inserted in the inside of vertical frame element 5e. In addition, the base end portion (i.e., head part 61a) of coupling member 61B is disposed at large diameter hole part 95a of upper joint 9. The seat surface of head part 61a of coupling member 61B is in contact with step 95c of upper joint 9. Note that the assembling process of frame element coupling device 6B is substantially identical to the above-described assembling process of frame element coupling device 6A, and is therefore description thereof is omitted.

In the mounted state of frame element coupling device 6B, head part 61a of coupling member 61B applies a downward force to upper joint 9. On the basis of such a downward force, upper joint 9 and middle joint 7 sandwich vertical frame element 5e in the vertical direction.

This configuration is effective for reducing the rattle between middle joint 7 and upper joint 9, and vertical frame element 5e. In addition, with middle joint 7 and upper joint 9 firmly fixed to vertical frame element 5e, lateral frame element 3e and depth frame element 4e are firmly fixed to vertical frame element 5e with upper joint 9 therebetween. In addition, lateral frame element 3c and depth frame element 4c are firmly fixed to vertical frame element 5e with middle joint 7 therebetween.

While frame element coupling devices 6A and 6B provided at first corner part R1 are described above, frame element coupling devices 6A and 6B are provided at first corner part R1 to fourth corner part R4 of storage shelf S in plan view in the present embodiment (see FIG. 1B). The structures of frame element coupling devices 6A and 6B provided at second corner part R2 to fourth corner part R4 are the same as those of frame element coupling devices 6A and 6B provided at first corner part R1.

The description for frame element coupling devices 6A and 6B provided at first corner part R1 may be appropriately applied to frame element coupling devices 6A and 6B provided at second corner part R2 to fourth corner part R4.

Frame element coupling devices 6A and 6B provided at second corner part R2 have structures that are symmetric with respect to frame element coupling devices 6A and 6B provided at first corner part R1 about the XZ plane. In addition, frame element coupling devices 6A and 6B provided at third corner part R3 have structures that are symmetric with respect to frame element coupling devices 6A and 6B provided at first corner part R1 about the YZ plane. Further, frame element coupling devices 6A and 6B provided at fourth corner part R4 are rotationally symmetrical (2-fold rotational symmetry) with respect to frame element coupling devices 6A and 6B provided at first corner part R1 about straight line L (see FIG. 1B). Note that the straight line L is a straight line that is parallel to the Z direction and passes through the intersection of a straight line connecting first corner part R1 and fourth corner part R4 and a straight line connecting second corner part R2 and third corner part R3 in plan view of storage shelf S (see FIG. 1B).

Note that coupling member 61B of frame element coupling device 6B may be coupled with middle joint 7, rather than with coupling member 61A of frame element coupling device 6A. In this case, middle joint 7 corresponds to an anchor member.

### Side Plate

Each side plate P1 is a plate-shaped member that is parallel to the XZ plane. In frame 1, side plate P1 is provided in a frame part composed of depth frame elements 4a and 4c and vertical frame elements 5a and 5c, and in a frame part composed of depth frame elements 4b and 4d and vertical frame elements 5b and 5d.

In addition, in frame 1, side plate P1 is provided in a frame part composed of depth frame elements 4c and 4e and vertical frame elements 5e and 5g, and in a frame part composed of depth frame elements 4d and 4f and vertical frame elements 5f and 5h.

### Back Plate

Each back plate P2 is a plate-shaped member that is parallel to the YZ plane. In frame 1, back plate P2 is provided in a frame part composed of lateral frame elements 3b and 3d and vertical frame elements 5c and 5d, and in a frame part composed of lateral frame elements 3d and 3f and vertical frame elements 5g and 5h.

### Lower Shelf Plate

Lower shelf plate P3 is a plate-shaped member that is parallel to the XY plane. In frame 1, lower shelf plate P3 is provided in a frame part composed of lateral frame elements 3a and 3b and depth frame elements 4a and 4b. Specifically, lower shelf plate P3 is placed on the top surfaces of placement plate part 31 of lateral frame elements 3a and 3b and placement plate part 41 of depth frame elements 4a and 4b.

### Middle Shelf Plate

Middle shelf plate P4 is a plate-shaped member that is parallel to the XY plane. In frame 1, middle shelf plate P4 is provided in a frame part composed of lateral frame elements 3c and 3d and depth frame elements 4c and 4d. Specifically, middle shelf plate P4 is placed on the top surfaces of placement plate part 31 of lateral frame elements 3c and 3d and placement plate part 41 of depth frame elements 4c and 4d.

### Upper Shelf Plate

Upper shelf plate P5 is a plate-shaped member that is parallel to the XY plane. In frame 1, upper shelf plate P5 is provided in a frame part composed of lateral frame elements 3e and 3f and depth frame elements 4e and 4f. Specifically, upper shelf plate P5 is placed on the top surfaces of placement plate part 31 of lateral frame elements 3e and 3f and placement plate part 41 of depth frame elements 4e and 4f.

### Supplementary Notes

Storage shelf S as described above includes a pair (also referred to as two sections) of housing parts S1 and S2 disposed in an overlapping relation in the vertical direction. The pair of housing parts S₁ and S₂ opens to the front side.

Note that although not illustrated in the drawings, at least one of housing part S₁ on the lower side and housing part S₂ on the upper side may be provided with a drawer. In addition, at least one of housing part S₁ on the lower side and housing part S₂ on the upper side may be provided with an openable door at the front end portion.

In addition, the number of rows and the number of sections of the storage shelf is not limited to the above-described case. For example, the storage shelf may have one row in the horizontal direction and three sections in the vertical direction. In this case, an additional frame part having a configuration similar to that of second frame part 2b is provided between first frame part 2a and second frame part 2b of storage shelf S illustrated in FIG. 1A. Then, second frame part 2b and the additional frame part are coupled using frame element coupling devices having a configuration substantially similar to that of the above-described frame element coupling devices 6A and 6B. Such frame element coupling devices have a configuration in which lower joint 8 in frame element coupling device 6A is replaced by middle joint 7, for example.

In addition, the angles between the fixing parts (i.e., first horizontal fixing part 72, second horizontal fixing part 73, first perpendicular fixing part 74, and second perpendicular fixing part 75) in the above-described joints (e.g., middle joint 7) is not limited to 90 degrees. For example, the angle between the joint fixing parts may be 60 degrees. In addition, the angle between the joint fixing parts may be adjusted using an angle adjustment mechanism such as a hinge, for example.

In addition, the structure of the portion that couples lateral frame elements 3a to 3f or depth frame elements 4a to 4f (also referred to as horizontal frames) to middle joint 7, lower joint 8, or upper joint 9 may be provided independently from frame element coupling devices 6A and 6B.

Specifically, in the above-described embodiment, lateral frame elements 3a to 3f or depth frame elements 4a to 4f (also referred to as horizontal frames) may be coupled to vertical frame elements 5a to 5h with a structure different from frame element coupling devices 6A and 6B.

The above-described frame element coupling device couples a first frame element extending in a tubular first direction and a second frame element extending in a second direction different from the first direction, and includes a joint member disposed at one end of the first frame element, and configured to couple the first frame element and the second frame element. In addition, the joint member includes an insertion part configured to be inserted to the second frame element, and a fastening member configured to be inserted to the second frame element in a state where the fastening member is threadedly engaged with the insertion part. In such a frame element coupling device, when the fastening member rotates around an axis, the fastening member protrudes from the insertion part such that the fastening member and the insertion part press the second frame element from inside, and that the insertion part is fixed to the second frame element.

This application is entitled to and claims the benefit of Japanese Patent Application No. 2018-114688 filed on June 15, 2018.

### Industrial Applicability

The frame element coupling device according to the embodiment of the present invention may be applied to fixtures (e.g., television boards or separators) other than storage shelves.

### Reference Signs List

S Storage shelf
S₁ Housing part
S₂ Housing part
R1 First corner part
R2 Second corner part
R3 Third corner part
R4 Fourth corner part
P1 Side plate
P2 Back plate
P3 Lower shelf plate
P4 Middle shelf plate
P5 Upper shelf plate
1 Frame
2a First frame part
2b Second frame part
2c Third frame part
3a to 3f Lateral frame element
31 Placement plate part
32 Inner wall part
33 Tool-through hole
34 Mounting hole
35 External wall part
36 Receiving surface
37 Fastening member
371 Head part
4a to 4f Depth frame element
41 Placement plate part
42 Inner wall part
43 Tool-through hole
44 Mounting hole
45 External wall part
46 Receiving surface
47 Fastening member
471 Head part
5a to 5h Vertical frame element
6A, 6B Frame element coupling device
61A, 61B Coupling member
61a Head part
61b Shaft part
61c Tool locking part
61d Female screw part
61e Male screw part
62 Adjuster
63 Anchor member
64, 64a Tool
7 Middle joint
71 Base part
7a First surface
7b Second surface
7c Third surface
7d Fourth surface
7e Fifth surface
7f Sixth surface
72 First horizontal fixing part
72b First through hole
72c Large diameter hole part
72d First female screw part
72e Second female screw part
73 Second horizontal fixing part
73b First through hole
73c Large diameter hole part
73d First female screw part
73e Second female screw part
74 First perpendicular fixing part
75 Second perpendicular fixing part
76 Through hole
76a Large diameter through hole
76b Small diameter through hole
76c Step
8 Lower joint
81 Base part
8a First surface
8b Second surface
8c Third surface
8d Fourth surface
8e Fifth surface
8f Sixth surface
82 First horizontal fixing part
82c First through hole
82d Large diameter hole part
82e First female screw part
82f Second female screw part
83 Second horizontal fixing part
83b First through hole
83c Large diameter hole part
83d First female screw part
83e Second female screw part
84 First perpendicular fixing part
86 Through hole
86a Large diameter female screw part
86b Small diameter female screw part
9 Upper joint
91 Base part
9a First surface
9b Second surface
9c Third surface
9d Fourth surface
9e Fifth surface
9f Sixth surface
92 First horizontal fixing part
92b First through hole
92c Large diameter hole part
92d First female screw part
92e Second female screw part
93 Second horizontal fixing part
93b First through hole
93c Large diameter hole part
93d First female screw part
93e Second female screw part
94 First perpendicular fixing part
95 Through hole
95a Large diameter hole part
95b Small diameter hole part
95c Step

## Claims

1. A frame element coupling device (6A) configured to couple a first frame element (5a) extending in a first direction, a second frame element (3c) extending in a second direction different from the first direction, the frame element coupling device (6A) comprising:
a joint member (7) disposed at one end of the first frame element (5a), and configured to couple the first frame element (5a) and the second frame element (3c) and to couple a third frame (4c) element to the first frame element (5a) and the second frame element (3c), the third frame element (4c) extending in a third direction that is different from the first direction and the second direction;
an anchor member (8) configured to be disposed at another end of the first frame element (5a) and
a coupling member (61A) insertable in the first frame element (5a), and configured to couple the joint member (7) and the anchor member (8),
**characterized in that**
the joint member (7) is configured to couple a fifth frame element (5e) to the first frame element (5a), the second frame element (3c), and the third frame element (4c), the fifth frame element (5e) being disposed along a line that is the same as the first frame element (5a),
wherein
the joint member (7) includes;
a base part (71);
a first fixing part (74) that is provided on the base part (71) and is insertable into an end portion of the first frame element (5a);
a second fixing part (72) that is provided on the base part (71) and is insertable into an end portion of the second frame element (3c);
a third fixing part (75) that is provided on the base part (71) and is insertable into an end portion of the fifth frame element (5e);
a fourth fixing part (73) that is provided on the base part (71) and is insertable into an end portion of the third frame element (4c); and
a through hole (76) that extends through the first fixing part (74), the base part (71), and the third fixing part (75) in the first direction,
wherein
the through hole (76) includes a large diameter through hole (76a) provided at an end portion on the side closer to the third fixing part (75) in the first direction, a small diameter through hole (76b) provided on the side closer to the first fixing part (74) than the large-diameter through hole (76a) in the first direction, and an annular step (76c) connecting the large diameter through hole (76a) and the small diameter through hole (76b);
the coupling member (61A) includes a head part (61a) and a shaft part (61b) and the coupling member (61A) is inserted in the through hole (76) such that the head part (61a) of the coupling member (61A) is disposed at large diameter through hole (76a); and a seat surface of the head part (61a) is in contact with the annular step (76c).

2. The frame element coupling device (6A) according to claim 1, wherein
the coupling member (61A) is a screw member configured to couple the joint member (7) and the anchor member (8) through thread-engagement with the anchor member (8), wherein a force sandwiching the first frame element (5a) between the joint member (7) and the anchor member (8) is adjusted when the coupling member (61A) is rotated around an axis.

3. The frame element coupling device (6A) according to claims 1 or 2, wherein the anchor member (8) is configured to couple the first frame element (5a) and a fourth frame element (3a) extending in the second direction.

4. The frame element coupling device (6A) according to any one of claims 1 to 3, wherein
the joint member (7) includes a fastening member (37) configured to be inserted to the second frame element (3c) in a state where the fastening member (37) is threadedly engaged with the second fixing part (72); and
when the fastening member (37) rotates around an axis, the fastening member (37) protrudes from the second fixing part (72) such that the fastening member (37) and the second fixing part (72) is configured to press the second frame element (3c) from inside and that the second fixing part (72) is fixable to the second frame element (3c).

5. A storage shelf (S) comprising the frame element coupling device (6A) according to any one of claims 1 to 4.

## Patentansprüche

1. Rahmenelement-Kopplungsvorrichtung (6A), die konfiguriert ist, ein erstes Rahmenelement (5a), das sich in einer ersten Richtung erstreckt, und ein zweites Rahmenelement (3c), das sich in einer zweiten Richtung, die sich von der ersten Richtung unterscheidet, erstreckt, zu koppeln, wobei die Rahmenelement-Kopplungsvorrichtung (6A) Folgendes umfasst:
ein Verbindungsorgan (7), das an einem Ende des ersten Rahmenelements (5a) angeordnet ist und konfiguriert ist, das erste Rahmenelement (5a) und das zweite Rahmenelement (3c) zu koppeln und ein drittes Rahmenelement (4c) an das erste Rahmenelement (5a) und das zweite Rahmenelement (3c) zu koppeln, wobei sich das dritte Rahmenelement (4c) in einer dritten Richtung erstreckt, die sich von der ersten Richtung und der zweiten Richtung unterscheidet;
ein Ankerorgan (8), das konfiguriert ist, an einem anderen Ende des ersten Rahmenelements (5a) angeordnet zu werden;
und
ein Kopplungsorgan (61A), das in das erste Rahmenelement (5a) eingesetzt werden kann, und konfiguriert ist, das Verbindungsorgan (7) und das Ankerorgan (8) zu koppeln, **dadurch gekennzeichnet, dass**
das Verbindungsorgan (7) konfiguriert ist, ein fünftes Rahmenelement (5e) an das erste Rahmenelement (5a), das zweite Rahmenelement (3c) und das dritte Rahmenelement (4c) zu koppeln, und das fünfte Rahmenelement (5e) entlang einer Linie angeordnet ist, die mit dem ersten Rahmenelement (5a) übereinstimmt,
wobei
das Verbindungsorgan (7) Folgendes enthält:
ein Basisteil (71);
ein erstes Fixierungsteil (74), das auf dem Basisteil (71) vorgesehen ist und in einen Endabschnitt des ersten Rahmenelements (5a) eingesetzt werden kann;
ein zweites Fixierungsteil (72), das auf dem Basisteil (71) vorgesehen ist und in einen Endabschnitt des zweiten Rahmenelements (3c) eingesetzt werden kann;
ein drittes Fixierungsteil (75), das auf dem Basisteil (71) vorgesehen ist und in einen Endabschnitt des fünften Rahmenelements (5e) eingesetzt werden kann;
ein viertes Fixierungsteil (73), das auf dem Basisteil (71) vorgesehen ist und in einen Endabschnitt des dritten Rahmenelements (4c) eingesetzt werden kann; und
ein Durchgangsloch (76), das sich durch das erste Fixierungsteil (74), das Basisteil (71) und das dritte Fixierungsteil (75) in der ersten Richtung erstreckt, wobei
das Durchgangsloch (76) ein Durchgangsloch (76a) mit großem Durchmesser, das an einem Endabschnitt auf der Seite vorgesehen ist, die sich in der ersten Richtung näher an dem dritten Fixierungsteil (75) befindet, ein Durchgangsloch (76b) mit kleinem Durchmesser, das in der ersten Richtung auf der Seite vorgesehen ist, die näher an dem ersten Fixierungsteil (74) liegt als das Durchgangsloch (76a) mit großem Durchmesser und eine ringförmige Stufe (76c) enthält, die das Durchgangsloch (76a) mit großem Durchmesser und das Durchgangsloch (76b) mit kleinem Durchmesser verbindet;
das Kopplungsorgan (61A) ein Kopfteil (61a) und ein Schaftteil (61b) enthält und das Kopplungsorgan (61A) derart in das Durchgangsloch (76) eingesetzt wird, dass das Kopfteil (61a) des Kopplungsorgans (61A) an dem Durchgangsloch (76a) mit großem Durchmesser angeordnet ist; und eine Sitzfläche des Kopfteils (61a) sich in Kontakt mit der ringförmigen Stufe (76c) befindet.

2. Rahmenelement-Kopplungsvorrichtung (6A) nach Anspruch 1, wobei
das Kopplungsorgan (61A) ein Schraubenorgan ist, das konfiguriert ist, das Verbindungsorgan (7) und das Ankerorgan (8) durch Gewindeeingriff mit dem Ankerorgan (8) zu koppeln, wobei eine Kraft, die das erste Rahmenelement (5a) zwischen dem Verbindungsorgan (7) und dem Ankerorgan (8) einzwängt, eingestellt wird, wenn das Kopplungsorgan (61A) um eine Achse gedreht wird.

3. Rahmenelement-Kopplungsvorrichtung (6A) nach Anspruch 1 oder 2, wobei das Ankerorgan (8) konfiguriert ist, das erste Rahmenelement (5a) und ein viertes Rahmenelement (3a), das sich in der zweiten Richtung erstreckt, zu koppeln.

4. Rahmenelement-Kopplungsvorrichtung (6A) nach einem der Ansprüche 1 bis 3, wobei
das Verbindungsorgan (7) ein Befestigungsorgan (37) enthält, das konfiguriert ist, in einem Zustand, in dem das Befestigungsorgan (37) sich mit dem zweiten Fixierungsteil (72) im Gewindeeingriff befindet, in das zweite Rahmenelement (3c) eingesetzt zu werden; und dann, wenn das Befestigungsorgan (37) um eine Achse gedreht wird, das Befestigungsorgan (37) aus dem zweiten Fixierungsteil (72) derart vorsteht, dass das Befestigungsorgan (37) und das zweite Fixierungsteil (72) konfiguriert sind, das zweite Rahmenelement (3c) von innen zu pressen, und derart, dass das zweite Befestigungsteil (72) an dem zweiten Rahmenelement (3c) befestigt werden kann.

5. Lagerregal (S), das die Rahmenelement-Kopplungsvorrichtung (6A) nach einem der Ansprüche 1 bis 4 umfasst.

## Revendications

1. Dispositif d'accouplement d'éléments de structure (6A) configuré pour accoupler un premier élément de structure (5a) s'étendant dans une première direction, un deuxième élément de structure (3c) s'étendant dans une deuxième direction différente de la première direction, le dispositif d'accouplement d'éléments de structure (6A) comprenant :
une pièce de jonction (7) disposée à une extrémité du premier élément de structure (5a) et configurée pour accoupler le premier élément de structure (5a) et le deuxième élément de structure (3c) et pour accoupler un troisième élément de structure (4c) au premier élément de structure (5a) et au deuxième élément de structure (3c), le troisième élément de structure (4c) s'étendant dans une troisième direction différente de la première direction et de la deuxième direction ;
une pièce d'ancrage (8) configurée pour être disposée à une autre extrémité du premier élément de structure (5a) ;
et
une pièce d'accouplement (61A) insérable dans le premier élément de structure (5a), et configurée pour accoupler la pièce de jonction (7) et la pièce d'ancrage (8), **caractérisé en ce que**
la pièce de jonction (7) est configurée pour accoupler un cinquième élément de structure (5e) au premier élément de structure (5a), au deuxième élément de structure (3c) et au troisième élément de structure (4c), le cinquième élément de structure (5e) étant disposé le long d'une ligne qui coïncide avec le premier élément de structure (5a),
où
la pièce de jonction (7) comporte :
une partie de base (71) ;
une première partie de fixation (74) prévue sur la partie de base (71) et insérable dans une portion d'extrémité du premier élément de structure (5a) ;
une deuxième partie de fixation (72) prévue sur la partie de base (71) et insérable dans une portion d'extrémité du deuxième élément de structure (3c) ;
une troisième partie de fixation (75) prévue sur la partie de base (71) et insérable dans une portion d'extrémité du cinquième élément de structure (5e) ;
une quatrième partie de fixation (73) prévue sur la partie de base (71) et insérable dans une portion d'extrémité du troisième élément de structure (4c) ; et
un trou traversant (76) qui s'étend à travers la première partie de fixation (74), la partie de base (71), et la troisième partie de fixation (75) dans la première direction,
où
le trou traversant (76) comprend un trou traversant de grand diamètre (76a) formé au niveau d'une portion d'extrémité sur le côté plus proche de la troisième partie de fixation (75) dans la première direction, un trou traversant de petit diamètre (76b) formé sur le côté plus proche de la première partie de fixation (74) relativement au trou traversant de grand diamètre (76a) dans la première direction, et un épaulement annulaire (76c) reliant le trou traversant de grand diamètre (76a) et le trou traversant de petit diamètre (76b) ;
la pièce d'accouplement (61A) comprend une partie tête (61a) et une partie tige (61b) et la pièce d'accouplement (61A) est insérée dans le trou traversant (76) de sorte que la partie tête (61a) de la pièce d'accouplement (61A) soit disposée au niveau du trou traversant de grand diamètre (76a) ; et une surface d'appui de la partie tête (61a) est en contact avec l'épaulement annulaire (76c).

2. Dispositif d'accouplement d'éléments de structure (6A) selon la revendication 1, dans lequel la pièce d'accouplement (61A) est une pièce filetée configurée pour accoupler la pièce de jonction (7) et la pièce d'ancrage (8) par mise en prise par vissage avec la pièce d'ancrage (8), une force prenant en sandwich le premier élément de structure (5a) entre la pièce de jonction (7) et la pièce d'ancrage (8) étant ajustée lorsque la pièce d'accouplement (61A) est mise en rotation autour d'un axe.

3. Dispositif d'accouplement d'éléments de structure (6A) selon la revendication 1 ou 2, dans lequel la pièce d'ancrage (8) est configurée pour accoupler le premier élément de structure (5a) et un quatrième élément de structure (3a) s'étendant dans la deuxième direction.

4. Dispositif d'accouplement d'éléments de structure (6A) selon l'une quelconque des revendications 1 à 3, dans lequel
la pièce de jonction (7) comprend une pièce de fixation (37) configurée pour être insérée dans le deuxième élément de structure (3c) dans un état dans lequel la pièce de fixation (37) est en prise par vissage avec la deuxième partie de fixation (72) ; et
lorsque la pièce de fixation (37) tourne autour d'un axe, la pièce de fixation (37) dépasse de la deuxième partie de fixation (72), de sorte que la pièce de fixation (37) et la deuxième partie de fixation (72) sont configurées pour exercer une pression sur le deuxième élément de structure (3c) de l'intérieur et que la deuxième partie de fixation (72) peut être fixée au deuxième élément de structure (3c).

5. Étagère de rangement (S) comprenant le dispositif d'accouplement d'éléments de structure (6A) selon l'une quelconque des revendications 1 à 4.
